# EUROPEAN PATENT SPECIFICATION

(11) **EP 2 731 174 B1**
(45) Date of publication and mention of the grant of the patent: **05.07.2017**
(21) Application number: 12823693.2
(22) Date of filing: 01.08.2012
(51) Int. Cl.: H01M 2/34, H01M 2/30, H01M 2/02, H01M 2/10, H01M 2/26, H01M 10/42

(54) **SECONDARY BATTERY PACK**
SEKUNDÄRBATTERIEPACK
BLOC-BATTERIE SECONDAIRE

(30) Priority: 12.08.2011 KR 20110080661; 14.02.2012 KR 20120014799
(43) Date of publication of application: 14.05.2014
(73) Proprietor: LG Chem, Ltd., Yeongdeungpo-gu Seoul 150-721 (KR)
(72) Inventor: CHOI, Jong Woon, Daejon 305-380 (KR); YUN, Hyung Ku, Daejeon 305-380, (KR); PARK, Sang Hyuk, Daejon 305 - 380 (KR)
(74) Representative: Cabinet Plasseraud
(86) International application number: PCT/KR2012/006119
(87) International publication number: WO 2013/024989

(56) References cited:
- EP-A1- 1 760 804
- EP-A2- 2 725 639
- EP-A2- 2 731 172
- EP-A2- 2 744 017
- WO-A2-2013/019066
- WO-A2-2013/022208
- WO-A2-2013/022211
- JP-A- 2005 166 644
- JP-A- 2009 099 320
- KR-A- 20060 103 030
- KR-A- 20100 082 678
- KR-A- 20100 121 336
- KR-A- 20110 066 774
- US-A1- 2005 208 346
- US-A1- 2006 046 139

## Description

### [TECHNICAL FIELD]

The present invention relates to a secondary battery pack.

### [BACKGROUND ART]

As mobile devices have been increasingly developed, and the demand for such mobile devices has increased, the demand for secondary batteries has also sharply increased. Among such secondary batteries is a lithium secondary battery exhibiting high energy density and operating voltage and excellent preservation and service-life characteristics, which has been widely used as an energy source for various electronic products as well as various kinds of mobile devices.

Depending upon kinds of devices in which secondary batteries are used, the secondary batteries may be configured to have a detachable type structure in which the secondary batteries can be easily inserted into and removed from external devices or to have an embedded type structure in which the secondary batteries are embedded in the devices. For example, secondary batteries used in the conventional mobile devices are configured to have a detachable type structure in which it is possible for a user to insert or remove a battery into or from each device. On the other hand, secondary batteries used in devices, such as some mobile phones, tablet PCs, and smart pads, may be configured to have an embedded type structure.

Lithium secondary batteries are widely used as such secondary batteries. Each of the secondary batteries includes an anode terminal and a cathode terminal electrically connected to a device, in which the secondary battery is mounted, and a safety element to effectively control an abnormal state, such as overcharge or overcurrent, of the secondary battery. Examples of the safety element may include a positive temperature coefficient (PTC) element, a protection circuit module (PCM), a fuse, and a thermal cutoff (TCO) element.

Generally, a safety element, such as a PCM, is connected to a battery cell, including an anode terminal and a cathode terminal, via a conductive nickel plates by welding or soldering. For example, the nickel plates are connected to the electrode terminals of the battery cell by welding or soldering, a protection circuit board (PCB) is attached to one side of a double-sided tape, a protective tape is attached to the other side of the double-sided tape, and electrode tabs of the PCB and the nickel plates are connected to each other by welding in a state in which the PCB is in tight contact with the battery cell. In this way, the PCM is connected to the battery cell to manufacture a battery pack.

It is required for the PCM to be maintained in electrical connection with the electrode terminals of the battery cell and, at the same time, to be electrically isolated from other parts of the battery cell. To this end, insulative tapes are attached to various members, including the PCM. In addition, a sealed portion of a battery case is partially bent, and an insulative tape is attached thereon or a barcode is printed thereon. That is, the process is very complicated.

Since a plurality of insulative tapes or parts is required to achieve safe connection between the safety element and the battery cell as described above, a battery pack assembly process is complicated, and manufacturing cost is increased. Also, when external impact is applied to a battery pack, the PCM may be damaged or dimensional stability may be greatly lowered due to the use of the insulative tapes, which exhibit low mechanical strength. A battery comprising a PCM module is disclosed in KR20100082678.

### [DISCLOSURE]

### [TECHNICAL PROBLEM]

It is an object of the present invention to provide a secondary battery pack that is capable of covering a protection circuit board of a secondary battery cell using an electrically insulative case, thereby protecting the protection circuit board from external impact, insulating the protection circuit board, and preventing electrode terminals of the secondary battery cell from being exposed outside.

It is another object of the present invention to provide a secondary battery pack that is capable of reducing the number of parts necessary to constitute the battery pack, thereby simplify an assembly process and exhibiting excellent structural stability.

It is another object of the present invention to provide a secondary battery pack configured to have a structure in which a protection circuit module including a protection circuit board and a case, in which the protection circuit board is disposed, is mounted to an outer circumference of a battery cell, thereby providing maximum capacity in the same standard. A protection circuit module that is capable of protecting a safety element from external impact, exhibiting dimensional stability, and preventing wrinkles from being formed at an outer face of a battery pack. is also disclosed.

### [TECHNICAL SOLUTION]

A secondary battery pack according to an embodiment of the present invention includes a battery cell having an anode terminal and a cathode terminal formed at one face having a sealed surplus portion and a protection circuit module (PCM) electrically connected to the battery cell via the anode terminal and the cathode terminal.

In this embodiment, the PCM icludes a board having a protection circuit formed thereon, the board being provided with an anode terminal connection part and a cathode terminal connection part connected to the anode terminal and the cathode terminal, respectively, and a PCM case configured to receive the board through an open face thereof so that the PCM case surrounds the board.

In this embodiment, the board is coupled to the anode terminal and the cathode terminal of the battery cell via the anode terminal connection part and the cathode terminal connection part and may be mounted to the sealed surplus portion of the battery cell, and the board mounted to the sealed surplus portion may be disposed in the PCM case.

In this embodiment, the battery cell may be a plate-shaped battery cell, and the anode terminal and the cathode terminal may be plate-shaped conductive members.

In this embodiment, the board further includes an external input and output terminal. The external input and output terminal is formed at the board at which the anode terminal connection part and the cathode terminal connection part are formed via an interconnection part.

Also, the external input and output terminal may be formed on the board at which the anode terminal connection part and the cathode terminal connection part are formed.

In this embodiment, the external input and output terminal may be formed at the other face of the board at which the anode terminal connection part and the cathode terminal connection part are formed.

In this embodiment, the PCM case further includes an opening formed at a face adjacent to the open face thereof. The opening is a slit type opening.

In this embodiment, the secondary battery pack may further include an insulative tape additionally attached to an electrode terminal exposure region of the sealed surplus portion. The insulative tape may be, for example, a double-sided tape.

In this embodiment, the secondary battery pack may further include an insulative tape additionally attached to at least one of outer faces of the PCM case.

In this embodiment, the battery cell may be configured to have a structure in which an electrode assembly, including cathodes, anodes, and separators respectively disposed between the cathodes and the anodes, is disposed in a battery case made of a laminate sheet including a metal layer and a resin layer in a sealed state.

In this embodiment, the board, disposed in the PCM case mounted to the sealed surplus portion, may be mounted to the sealed surplus portion in a state in which the board is disposed in the PCM case so that the face of the board at which the anode terminal connection part and the cathode terminal connection part are formed is opposite to the face of the battery cell at which the sealed surplus portion is formed.

In this embodiment, the anode terminal connection part of the PCM may be connected to the anode terminal of the batter cell via a second safety element.

In this embodiment, the secondary battery pack may further include a nickel plate additionally mounted to one face of the cathode terminal, to which the cathode terminal connection part of the board is coupled, by ultrasonic welding.

In this embodiment, the secondary battery pack may further include a label to cover the battery cell. The label may be configured to have a structure to cover sealed outer circumferences of the battery cell.

A protection circuit module is disclosed and includes a protection circuit board having an anode terminal connection part and a cathode terminal connection part connected to an anode terminal and a cathode terminal of a battery cell, respectively, and a case configured to receive the protection circuit board through an open face thereof.

In the protection circuit module according to this embodiment, the protection circuit board may be coupled to the anode terminal and the cathode terminal of the battery cell via the anode terminal connection part and the cathode terminal connection part and may be mounted to a sealed surplus portion formed at one face of the battery cell, and the case may be placed on the sealed surplus portion so that the protection circuit board mounted to the sealed surplus portion is disposed in the case.

In the protection circuit module according to this embodiment, the anode terminal connection part may be a second safety element connection part.

In the protection circuit module according to this embodiment, the case may be configured to have a box structure opened at one face thereof.

In the protection circuit module according to this embodiment, the protection circuit board may further include an external input and output terminal coupled to the board at which the anode terminal connection part and the cathode terminal connection part are formed via an interconnection part. The case may further include an opening, through which the interconnection part extends, formed at a face adjacent to the open face thereof. Also, the case may include, for example, a slit type opening.

A method of manufacturing a secondary battery pack according to a further embodiment of the present invention includes a step of forming a battery cell configured to have a structure in which an electrode assembly, comprising cathodes, anodes, and separators respectively disposed between the cathodes and the anodes, is disposed in a battery case in a sealed state, one of sealed outer circumferences of the battery cell having a surplus portion, a step of exposing an anode terminal and a cathode terminal on the sealed surplus portion of the battery cell and mounting a protection circuit board, having an anode terminal connection part and a cathode terminal connection part connected to the anode terminal and the cathode terminal, respectively, to the sealed surplus portion, and a step of mounting a case opened at one face thereof to the sealed surplus portion so that the protection circuit board mounted to the sealed surplus portion is received in the case.

### [ADVANTAGEOUS EFFECTS]

As is apparent from the above description, the secondary battery pack according to the present invention is configured so that the protection circuit board is disposed in the electrically insulative case. Consequently, it is possible to protect and insulate the protection circuit board. Also, it is possible to easily prevent the electrode terminals from being exposed outside without insulation of the electrode terminal through the use of additional members.

Also, the secondary battery pack according to the present invention is configured to have a structure in which the PCM, in which the protection circuit board is disposed in a single case, is mounted to the sealed surplus portion of the battery cell. Consequently, it is possible to effectively protect the PCM and to greatly improve manufacturing efficiency.

Furthermore, the secondary battery pack according to the present invention is configured to have a structure in which the protection circuit board is mounted in the case. Consequently, it is possible to easily manufacture the secondary battery pack, to relatively reduce a defect rate, and to configure the secondary battery pack so that the secondary battery pack has no wrinkles formed at the outer face thereof, i.e. a neat and clean external appearance.

In addition, the secondary battery pack according to the present invention is configured to have a structure in which the protection circuit board is mounted to one of the outer circumferences, e.g. one of the sealed portions, of the battery cell. Consequently, it is possible to reduce the length of the sealed portion and to increase the capacity of the secondary battery pack per unit volume.

### [BRIEF DESCRIPTION OF DRAWINGS]

The above and other objects, features and other advantages of the present invention will be more clearly understood from the following detailed description taken in conjunction with the accompanying drawings, in which:
FIG. 1 is an exploded perspective view of a secondary battery pack according to an embodiment of the present invention;
FIGS. 2 to 8 are perspective views showing a method of manufacturing the secondary battery pack of FIG. 1;
FIG. 9 is a series of partial typical views showing a protection circuit board (PCB) bending process according to an embodiment of the present invention; and
FIG. 10 is a perspective view of a secondary battery pack according to another embodiment of the present invention.

### [DETAILED DESCRIPTION OF THE INVENTION]

Now, exemplary embodiments of the present invention will be described in detail with reference to the accompanying drawings. It should be noted, however, that the embodiments will be described only for a better understanding of the present invention, and therefore, the scope of the present invention is not limited by the illustrated embodiments.

A secondary battery pack according to an embodiment of the present invention includes a battery cell having four sealed outer circumferences and a safety element mounted to a sealed outer circumference having a surplus portion, which is one of the outer circumferences. A safety element according to an embodiment of the present invention may include a first safety element and a second safety element. The first safety element may be a protection circuit, and the second safety element may be a positive temperature coefficient (PTC) element, a fuse, or a thermal cutoff (TCO) element. Also, the second safety element may be mounted in a protection circuit module (PCM) in the form of a part.

The safety element according to the embodiment of the present invention may be a PCM. The PCM includes a protection circuit board and a case, in which the protection circuit board is disposed. For the convenience of description, a PCM will be described as being adopted as the safety element, and the PCM will be described as including a protection circuit board (PCB) in this specification, to which, however, the safety element according to the embodiment of the present invention is not limited.

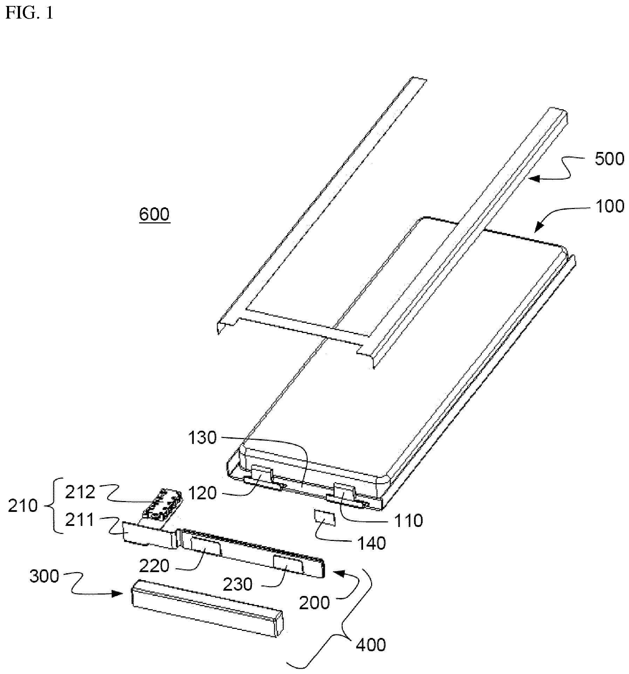

Hereinafter, a secondary battery pack according to an embodiment of the present invention will be described with reference to FIG. 1. FIG. 1 typically shows an exploded perspective view of a secondary battery pack according to an embodiment of the present invention.

Referring to FIG. 1, a secondary battery pack 600 may include an anode terminal 120, a cathode terminal 110, a battery cell 100, a PCM 400, and a label 500.

A battery cell 100 according to an embodiment of the present invention is a pouch-shaped battery cell configured so that an electrode assembly of a cathode/separator/anode structure is disposed in a battery case made of a laminate sheet including a metal layer and a resin layer in a sealed state, to which, however, the battery cell according to the embodiment of the present invention is not limited.

Referring to FIG. 1, the battery cell 100 includes a sealed surplus portion 130 formed at one face thereof and an anode terminal 120 and a cathode terminal 110 exposed to the sealed surplus portion 130. The term 'face' used in this specification indicates an arbitrary face of a tetrahedron with four faces, and is understood as including a side, a section, or an end. Also, in this specification, a sealed portion having a surplus space formed at one of the sealed outer circumferences formed when an electrode assembly is disposed in a battery case made of a laminate sheet in a sealed state is referred to as a sealed surplus portion 130. However, a person having ordinary skill in the art to which the present invention pertains will appreciate that the sealed surplus portion may be replaced by terms, such as a thermal welded surplus portion and a sealed terrace, as long as the specified terms have the same meaning as the sealed surplus portion.

Also, as shown in FIG. 1, the sealed surplus portion 130 may be formed by extending a sealed portion formed at one arbitrary face of the battery cell in a direction perpendicular to the lengthwise direction of the face.

An anode terminal 120 and a cathode terminal 110 according to an embodiment of the present invention are plate-shaped conductive members. The anode terminal 120 and the cathode terminal 110 are electrically connected to a PCB 200 of a PCM 400, which will hereinafter be described.

A PCM 400 according to an embodiment of the present invention includes a PCB 200 having a protection circuit, an electrically insulative PCM case 300, in which the PCB 200 is disposed, and an external input and output terminal 210.

Referring to FIG. 1, the PCB 200 is a board including a protection circuit. The PCB may be referred to as a protection circuit board or simply a board. The PCB 200 further includes an anode terminal connection part 220 connected to the anode terminal 120 of the battery cell 100 and a cathode terminal connection part 230 connected to the cathode terminal 110 of the battery cell 100 on the board in addition to the protection circuit to control overcharge, overdischarge, and overcurrent of the battery. In addition to the protection circuit and the two connection parts 220 and 230, the PCB 200 further includes an external input and output terminal 210 connected to the board via an interconnection part 211 connected to one end of the board, as shown in FIG. 1.

An external input and output terminal 210 according to an embodiment of the present invention is not particularly restricted so long as the external input and output terminal can be electrically connected to the PCB 200 to supply current from an external device, such as a charger, to the battery cell 100 or to supply current from the battery cell 100 to an external device, such as a mobile phone, an MP3 player, etc. For example, the external input and output terminal 210 may be configured to have a plate structure having a connector 212 mounted to one end thereof.

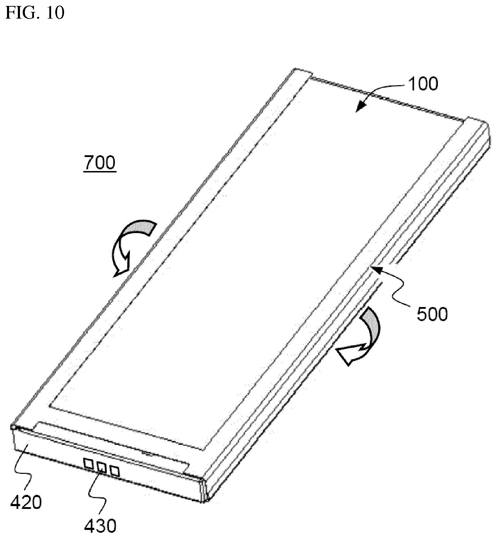

Also, unlike the embodiment shown in FIG. 1, the external input and output terminal may be formed on the board on which the anode terminal connection part and the cathode terminal connection part are formed without being connected to the PCB 200 via the interconnection part. A secondary battery pack with the above-stated construction is shown in FIG. 10. In a case in which an external input and output terminal is formed on a PCB, openings are formed at a region of a PCM case 420 (see FIG. 10), in which the PCB is disposed, corresponding to an external input and output terminal 430 (see FIG. 10). The external input and output terminal may be electrically connected to an external device through the openings.

An anode terminal connection part 220 according to an embodiment of the present invention includes a part coupled to the PCB 200 and an extension part that can be bent when the anode terminal connection part 220 is connected to the anode terminal 120 of the battery cell 100. In the same manner, a cathode terminal connection part 230 according to an embodiment of the present invention includes a part coupled to the PCB 200 and an extension part that can be bent when the cathode terminal connection part 230 is connected to the cathode terminal 110 of the battery cell 100.

As shown in FIG. 1, the external input and output terminal 210 according to the embodiment of the present invention is configured to have a plate structure having a connector 212 mounted to one end thereof, to which, however, the external input and output terminal 210 is not limited. Also, as shown in FIG. 1, the external input and output terminal 210 is configured to face in a direction opposite to a direction in which the anode terminal connection part 220 and the cathode terminal connection part 230 face, which, however, is only an example. According to another embodiment of the present invention, the external input and output terminal 210 may be configured to face in the same direction as a direction in which the anode terminal connection part 220 and the cathode terminal connection part 230 face.

A PCM case 300 according to an embodiment of the present invention is configured to have a hollow box structure opened at one face thereof so that the PCB 200 can be mounted in the PCM case 300 through the open face. Consequently, dimensional stability of the PCM case 300 is high, and it is possible to greatly reduce mounting time and process. Here, the mounting time means time required for an assembly process of placing the PCB 200 in the PCM case 300 and assembling the PCB 200 with the PCM case 300. Reduction of the mounting time means reduction of time required for the assembly process, and therefore, it is possible to greatly simplify the process.

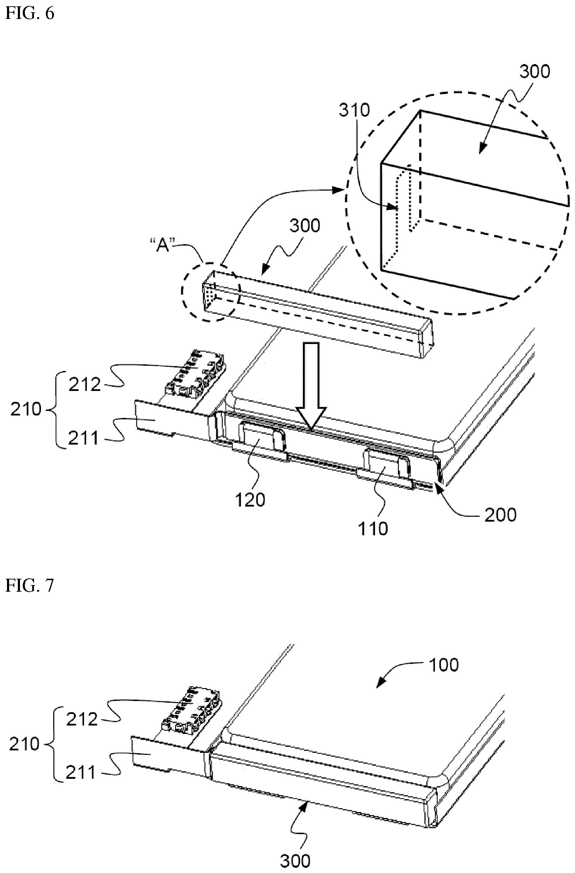

The PCM case 300 may have a size sufficient to receive and surround the PCB 200 mounted on the sealed surplus portion 130 of the battery cell 100. In addition, an opening is formed at a face of the PCM case 300 adjacent to the open face. As shown in Fig. 6 a slit type opening 310 is formed at the PCM case.

A secondary battery pack according to another embodiment of the present invention may be configured so that a safety element is further mounted between at least one of the electrode terminals, i.e. the anode terminal and/or the cathode terminal, of the battery cell and the PCB. In this case, the safety element may be disposed between, for example, the anode terminal of the battery and the PCB. The safety element is mounted in the PCM case together with the PCB so that the structural stability of the safety element is secured.

Consequently, it is possible to directly connect the cathode terminal of the battery cell to the cathode terminal connection part of the PCB and to connect one side of the safety element to the safety element connection part disposed on the same face of the PCB in a state in which the anode terminal is connected to the other side of the safety element without shape deformation or further use of additional members, and therefore, it is possible to stably mount the safety element, the structural strength is low, to the PCB, thereby reducing a defect rate in a manufacturing process and improving manufacturing efficiency.

The safety element is a member which interrupts current when the temperature of the battery cell is increased to secure safety. For example, the safety element may be a PTC element, the resistance of which increases as the temperature of the battery cell is increased, or a fuse, which is broken when the temperature of the battery cell is increased. However, the safety element is not limited to the PTC element and the fuse.

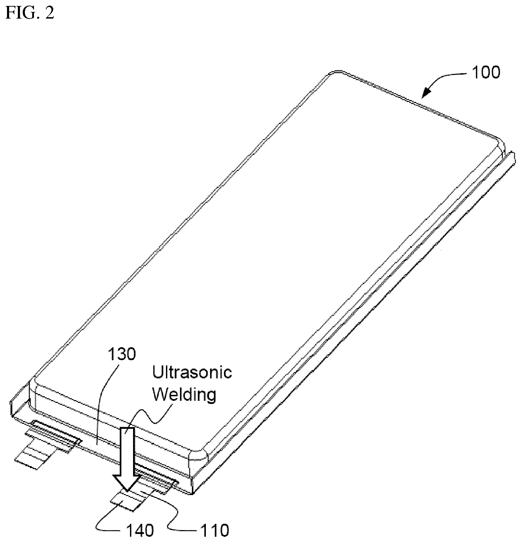

Hereinafter, a method of manufacturing the secondary battery pack shown in FIG. 1 will be described with reference to FIGS. 2 to 8. FIGS. 2 to 8 are various perspective views of a secondary battery pack illustrating a method of manufacturing the secondary battery pack.

Referring first to FIG. 2, a surplus portion, i.e. a sealed surplus portion 130, is formed at one of sealed faces of a battery cell 100, and an anode terminal 120 and a cathode terminal 110 of the battery cell 100 are disposed on the sealed surplus portion 130. The sealed surplus portion 130 has a size sufficient to receive a PCM 400, in which a PCB 200 is coupled with a PCM case 300, and the size of the PCM case 300 may be greater or less than that of the sealed surplus portion 130. A person having ordinary skill in the art to which the present invention pertains will appreciate that the size of the PCM case 300 may be properly adjusted based on the capacity and shape of the battery cell.

Subsequently, as shown in FIG. 2, a nickel plate 140 may be coupled to a portion of the cathode terminal 110, for example, by ultrasonic welding. In a case in which the nickel plate 140 is mounted to the cathode terminal 110, it is possible to prevent deterioration of weldability between the cathode terminal, made of aluminum, of the battery cell and a PCB cathode terminal connection part made of nickel due to different properties.

Also, in another embedment of the present invention, as previously described, an additional safety element, such as a PTC element, may be selectively mounted between the anode terminal 120 and an anode terminal connection part 220 to secure stability. In this case, the anode terminal connection part 220 may be a safety element connection part.

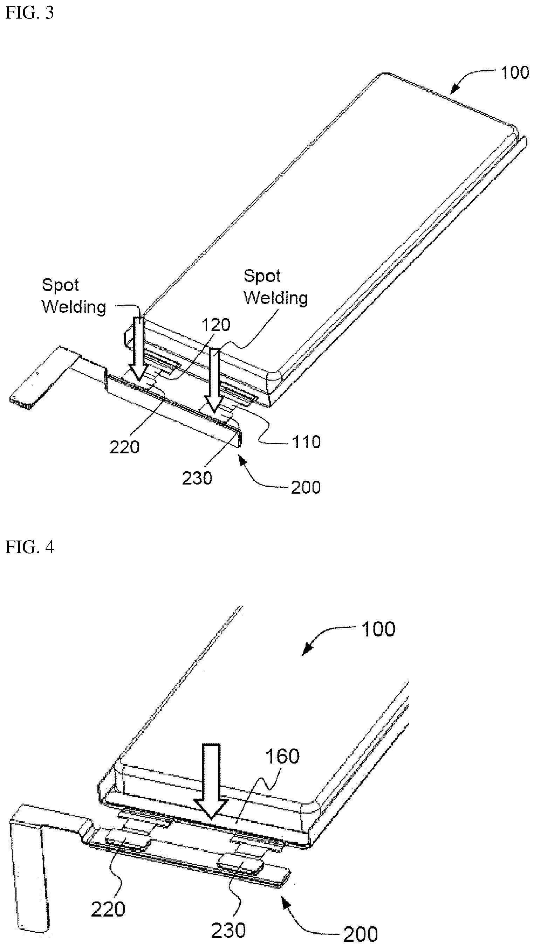

Subsequently, as shown in FIG. 3, the anode terminal connection part 220 and a cathode terminal connection part 230 formed at the PCB 200 are welded to the anode terminal 120 and the cathode terminal 110 of the battery cell 100, respectively, for example, by spot welding. In a case in which the nickel plate 140 is welded to the cathode terminal 110 as shown in FIG. 2, the cathode terminal connection part 230 is welded to the nickel plate 140.

Since the anode terminal connection part 220 and the cathode terminal connection part 230 each include a part coupled to the PCB 200 and a bendable extension part as described above, the anode terminal connection part 220 and the cathode terminal connection part 230 of the PCB 200 may be coupled to the anode terminal 120 and the cathode terminal 110 of the battery cell 100, respectively, by welding so that the PCB 200 is opposite to one face of the battery cell 100 at which the sealed surplus portion 130 is formed, as can be seen from FIG. 3.

Referring to FIG. 4 together with FIG. 1, after the anode terminal connection part 220 and the cathode terminal connection part 230 are bent, an adhesive tape 160, serving as an insulation tape, may be attached to an electrode terminal exposure region of the sealed surplus portion 130 of the main body of the battery cell 100. In a case in which the insulation tape is further attached to the electrode terminal exposure region of the sealed surplus portion 130 as described above, it is possible to more effectively improve insulativity of the electrode terminal exposure region. Also, in a case in which the insulation tape is a double-sided tape, the double-side tape provides coupling force between the PCM case and the sealed surplus portion when the PCM case is mounted to the PCB, thereby further improving structural stability.

As shown in FIG. 4, the PCB 200 is disposed in a direction parallel to the battery cell 100 so that the anode terminal connection part 220 and the cathode terminal connection part 230 of the PCB 200 face upward, and an external input and output terminal 210 of the PCB 200 faces downward.

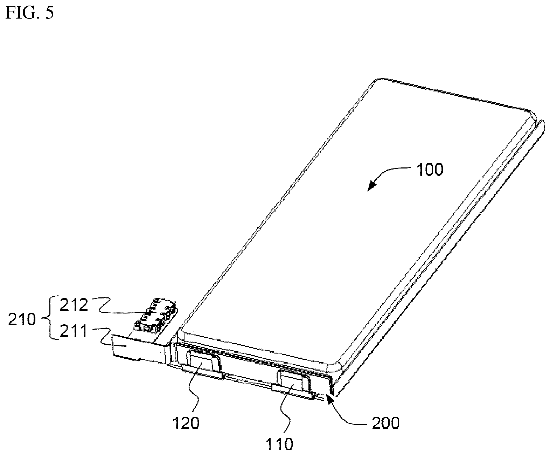

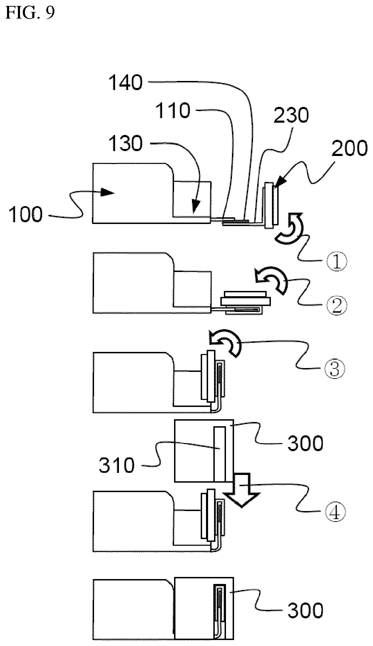

Referring to FIGS. 5 and 9, in order to mount the PCB 200, connected to the anode terminal 120 and the cathode terminal 110 of the battery cell 100 via the anode terminal connection part 220 and the cathode terminal connection part 230, to the sealed surplus portion 130 of the battery cell 100, first, one face of the PCB 200 at which the anode terminal connection part and the cathode terminal connection part is bent so that the face of the PCB 200 is opposite to one face of the battery cell 100 at which the sealed surplus portion 130 is formed, and the bendable extension parts of the anode terminal connection part 220 and the cathode terminal connection part 230 are bent so that the PCB 200 is located on the coupling portions between the anode terminal 120 and the anode terminal connection part 220 and between the cathode terminal 110 and the cathode terminal connection part 230. Subsequently, the anode terminal 120 and the cathode terminal 110 is bent toward the face of the battery cell at which the sealed surplus portion 130 is formed so that the PCB 200 is mounted to the sealed surplus portion 130. At this time, as shown in FIG. 9, the other face of the PCB 200 opposite to the face of the PCB at which the anode terminal connection part and the cathode terminal connection part are formed is opposite to one face of the battery cell 100, and the anode terminal 120 and the cathode terminal 110 of the battery cell 100 face outside the battery cell 100.

A process of mounting the PCB 200 to the sealed surplus portion 130 of the battery cell 100 will be described in more detail with reference to FIG. 9. For the convenience of description, FIG. 9 shows a process of mounting the PCB 200, at which the cathode terminal connection part 230 is formed, to the sealed surplus portion 130 of the battery cell 100.

First, the cathode terminal connection part 230 of the PCB 200 is welded to the nickel plate 140 connected to the cathode terminal 110, the PCB 200 is bent so as to be opposite to one face of the battery cell at which the sealed surplus portion 130 is formed (see an arrow indicated by ① in FIG. 9) as previously described, and the bendable extension part of the cathode terminal connection part 230 is bent so that the PCB 200 is located on the coupling portion between the cathode terminal 110 and the cathode terminal connection part 230 (see an arrow indicated by ② in FIG. 9). Subsequently, the cathode terminal 110 is bent so that the PCB 200 is mounted to the sealed surplus portion 130 (see an arrow indicated by ③ in FIG. 9). As shown in FIG. 9, it can be seen that, when the PCB 200 is mounted to the sealed surplus portion 130, the PCB is mounted to the sealed surplus portion 130 in consideration of a space in which the PCM case 300, in which the PCB 200 is disposed, will be placed afterwards.

When the PCB 200 is mounted to the sealed surplus portion 130 formed at one face of the battery cell 100 as described above, the PCB 200 is mounted perpendicularly to the sealed surplus portion 130. In a case in which it is difficult for the sealed surplus portion 130 to have a sufficient size, therefore, the size of the PCB 200 may be reduced.

A process of surrounding the PCB 200 mounted to the sealed surplus portion 130 of the battery cell 100 using the PCM case 300 will be described with reference to FIGS. 6, 7, and 9. As previously described in connection with FIG. 1, the PCM case 300 is opened at one face thereof so that the PCB is received in the PCM case 300 through the open face (see "A" part of FIG. 6). Also, in a case in which an external input and output terminal 210 is connected to the connection parts of the PCB 200 via an interconnection part as shown in FIG. 6, an opening, e.g. a slit type opening 310, may be formed at one face of the PCM case 300 corresponding to the interconnection part 211 of the PCB 200 so that the external input and output terminal 210 is exposed outside. Since the interconnection part 211 of the PCB 200 extends through the slit type opening 310, the external input and output terminal 210 connected to the interconnection part 211 is exposed outside.

Referring back to FIG. 9, the PCM case 300 is coupled to the PCB 200 from above so that the PCB 200 is received in the PCM case 300 in a state in which the PCB 200 is mounted to the sealed surplus portion 130 of the battery cell 100 (see an arrow indicated by ④ in FIG. 9). Alternatively, the PCB 200 may be received in the PCM case 300 in the lateral direction (a direction perpendicular to an arrow direction of FIG. 9). As can be seen from FIG. 9, the shape or size of the PCM case 300 may be properly adjusted based on the sealed surplus portion 130 so that the PCM case 300 can receive the PCB 200 in the sealed surplus portion 130. Also, the shape and size of the slit type opening 310 formed at one face of the PCM case 300 are not limited to those shown in FIG. 6. That is, the shape and size of the slit type opening 310 are not particularly restricted so long as the interconnection part 211 of the external input and output terminal 210 can extend through the slit type opening 310.

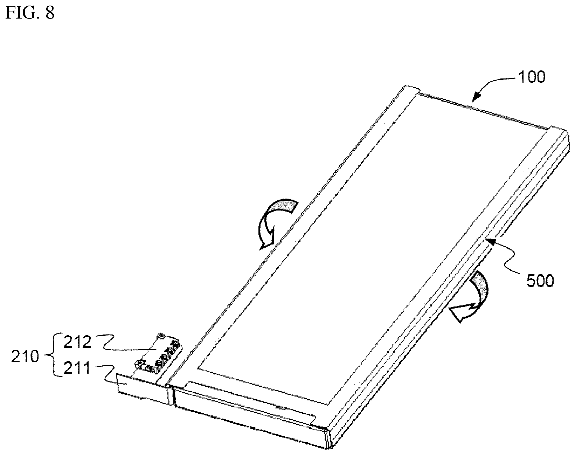

FIG. 8 is a view showing a state in which a label 500 covers the PCM case 300 and the battery cell 100 in a state in which the PCB 200 mounted to sealed surplus portion 130 of the battery cell 100 is disposed in the PCM case 300. The label 500 according to the present invention may be configured to cover the sealed outer circumferences of the battery cell 100 excluding the sealed surplus portion 130 (see arrow directions in FIG. 8) so that the external input and output terminal can be exposed outside. For example, as shown in FIG. 8, the label 500 may be attached to cover the top of the PCM 400, in which the PCB 200 is coupled to the PCM case 300, one face of the PCM 400 which is exposed outside, the remaining portion of the PCM 400 excluding the external input and output terminal exposed outside, and the sealed outer circumferences of the battery cell 100.

In a case in which the label 500 is attached to the battery cell, it is possible to stably fix the sealed outer circumferences of the battery cell to the main body of the battery cell while maintaining the overall insulation state, thereby more stably securing the electrical connection state between the electrode terminals of the battery cell and the PCB.

FIG. 10 is a perspective view of a secondary battery pack according to another embodiment of the present invention configured so that an external input and output terminal is mounted to a PCB. Referring to FIG. 10, as previously described, a secondary battery pack 700 is configured to have a structure in which an external input and output terminal 430 is formed at one face of the PCB (not shown) so that the external input and output terminal 430 is exposed outside through a PCM case 420.

As is apparent from the above description, the secondary battery pack according to the present invention is configured so that the PCM 400, in which the protection circuit board electrically connected to the cathode terminal and the anode terminal of the battery cell is disposed in the case, is mounted to the sealed surplus portion formed at one face of the battery cell. Consequently, it is possible to effectively protect the PCM and to greatly reduce the number of parts constituting the secondary battery pack, thereby greatly improving manufacturing efficiency, as compared with the conventional secondary battery pack.

Also, the secondary battery pack according to the present invention is configured so that the protection circuit board is disposed in the electrically insulative case. Consequently, it is possible to protect and insulate the PCM including the protection circuit board. Also, it is possible to easily prevent the electrode terminals from being exposed outside without insulation of the electrode terminals through the use of additional members.

Furthermore, the secondary battery pack according to the present invention is configured so that the protection circuit board is mounted in the case. Consequently, it is possible to easily manufacture the secondary battery pack, to relatively reduce a defect rate, and to configure the secondary battery pack so that the secondary battery pack has no wrinkles formed at the outer face thereof, i.e. a neat and clean external appearance, as compared with the conventional secondary battery pack in which the PCM is insulated using a tape.

In addition, the secondary battery pack according to the present invention is configured so that the protection circuit board is mounted to the sealed surplus portion formed at one face of the battery cell. Consequently, it is possible to reduce the length of the sealed surplus portion and to increase the capacity of the battery pack per unit volume, as compared with the conventional secondary battery pack.

Meanwhile, in a general process of assembling the secondary battery pack, the connection members and the PCM are coupled, and an insulative tape is attached at each step, to the PCM assembly is mounted to the battery cell, as previously described. That is, the PCM assembly is mounted to the battery cell using a plurality of parts with the result that a plurality of processes is required, and structural stability as well as mechanical strength is low.

On the other hand, the disclosed protection circuit module is configured to have a structure in which the protection circuit board is mounted in the case, and therefore, it is possible to improve structural stability of the battery pack, to greatly simplify the process of manufacturing the battery pack, to secure excellent insulativity, and to maximize the capacity of the battery cell in the battery pack having the same standard as the conventional battery pack.

Also, in the manufacturing method according to the present invention, it is possible to protect and insulate the PCM using the case without an additional member, such as a label or an insulative tape. Also, the protection circuit board is electrically connected to the electrode terminals, the electrode terminals are bent, and then the protection circuit board is mounted in the case with the result that no exposed region is formed during the bending process, and therefore, an additional insulative member is not required.

## Claims

1. A secondary battery pack (600) comprising:
a battery cell (100) having an anode terminal (120) and a cathode terminal (110) formed at one face having a sealed surplus portion (130); and
a protection circuit module (PCM, 400) electrically connected to the battery cell (100) via the anode terminal (120) and the cathode terminal (110), wherein
the PCM (400) comprises:
a board (200) having a protection circuit formed thereon, the board (200) being provided with an anode terminal connection part (220) and a cathode terminal connection part (230) connected to the anode terminal (120) and the cathode terminal (110), respectively; and
a PCM case (300) configured to receive the board (200) through an open face thereof so that the PCM case (300) surrounds the board (200), and
the board (200) is coupled to the anode terminal (120) and the cathode terminal (110) of the battery cell (100) via the anode terminal connection part (220) and the cathode terminal connection part (230) and is mounted to the sealed surplus portion (130) of the battery cell (100), and the board (200) mounted to the sealed surplus portion (130) is disposed in the PCM case(300), **characterised in that** the PCM case (300) is coupled to the board (200) from above so that the board (200) is received in the PCM case (300) in a state in which the board (200) is mounted perpendicularly to the sealed surplus portion (130),
wherein the board (200) further comprises an external input and output terminal, and the external input and output terminal (210) is formed at the board (200) at which the anode terminal connection part (220) and the cathode terminal connection part (230) are formed via an interconnection part (211), and
wherein the PCM case (300) further comprises a slit type opening (310) formed at a face adjacent to the open face thereof, and the interconnection part (211)extends through the slit type opening (310).

2. The secondary battery pack (600) according to claim 1, wherein the battery cell (100) is a plate-shaped battery cell, and the anode terminal (120) and the cathode terminal (110) are plate-shaped conductive members.

3. The secondary battery pack (600) according to claim 1, wherein the external input and output terminal (210) is formed on the board (200) at which the anode terminal connection part (220) and the cathode terminal connection part (230) are formed.

4. The secondary battery pack (600) according to claim 1, wherein the external input and output terminal (210) is formed at the other face of the board (200) at which the anode terminal connection part (220) and the cathode terminal connection part (230) are formed.

5. The secondary battery pack (600) according to claim 1, further comprising an insulative tape additionally attached to an electrode terminal exposure region of the sealed surplus portion (130).

6. The secondary battery pack (600) according to claim 5, wherein the insulative tape is a double-sided tape.

7. The secondary battery pack (600) according to claim 1, further comprising an insulative tape additionally attached to at least one of outer faces of the PCM case (300).

8. The secondary battery pack (600) according to claim 1, wherein the battery cell (100) is configured to have a structure in which an electrode assembly, comprising cathodes, anodes, and separators respectively disposed between the cathodes and the anodes, is disposed in a battery case made of a laminate sheet comprising a metal layer and a resin layer in a sealed state.

9. The secondary battery pack (600) according to claim 1, wherein the board (200), disposed in the PCM case (300) mounted to the sealed surplus portion (130), is mounted to the sealed surplus portion (130) in a state in which the board (200) is disposed in the PCM case (300) so that the face of the board (200) at which the anode terminal connection part (220) and the cathode terminal connection part (230) are formed is opposite to the face of the battery cell (100) at which the sealed surplus portion (130) is formed.

10. The secondary battery pack (600) according to claim 1, wherein the anode terminal connection part (220) of the PCM (400) is connected to the anode terminal of the batter cell via a second safety element.

11. The secondary battery pack (600) according to claim 1, further comprising a nickel plate (140) additionally mounted to one face of the cathode terminal (110), to which the cathode terminal connection part (230) of the board (200) is coupled, by ultrasonic welding.

12. The secondary battery pack (600) according to claim 1, further comprising a label (500) to cover the battery cell (100).

13. The secondary battery pack (600) according to claim 12, wherein the label (500) is configured to have a structure to cover sealed outer circumferences of the battery cell (100).

14. A method of manufacturing the secondary battery pack (600) according to claim 1, comprising:
a step of forming a battery cell (100) configured to have a structure in which an electrode assembly, comprising cathodes, anodes, and separators respectively disposed between the cathodes and the anodes, is disposed in a battery case in a sealed state, one of sealed outer circumferences of the battery cell (100) having a surplus portion;
a step of exposing an anode terminal (120) and a cathode terminal (110) on the sealed surplus portion (130) of the battery cell (100) and mounting a protection circuit board (200), having an anode terminal connection part (220) and a cathode terminal connection part (230) connected to the anode terminal (120) and the cathode terminal (110), respectively, to the sealed surplus portion (130); and
a step of mounting a PCM case (300) opened at one face thereof to the sealed surplus portion (130) so that the protection circuit board (200) mounted to the sealed surplus portion (130) is received in the PCM case (300).

## Patentansprüche

1. Sekundärbatteriepack (600), welches aufweist:
eine Batteriezelle (100) mit einem Anodenanschluss (120) und einem Kathodenanschluss (110), die an einer einen abgedichteten Überschussabschnitt aufweisenden (130) Seite ausgebildet sind; und
ein Schutzschaltungsmodul (PCM, 400), das durch den Anodenanschluss (120) und den Kathodenanschluss (110) mit der Batteriezelle (100) elektrisch verbunden ist, wobei
das PCM (400) aufweist:
eine Platine (200), auf der eine Schutzschaltung ausgebildet ist, wobei die Platine (200) mit einem Anodenanschlussverbindungsteil (220) und einem Kathodenanschlussverbindungsteil (230) versehen ist, die jeweils mit dem Anodenanschluss (120) und dem Kathodenanschluss (110) verbunden sind;
ein PCM-Gehäuse (300), das konfiguriert ist, um durch seine offene Seite die Platine (200) aufzunehmen, so dass das PCM-Gehäuse (300) die Platine (200) umgibt, und
die Platine (200) mit dem Anodenanschluss (120) und dem Kathodenanschluss (110) der Batteriezelle (100) über das Anodenanschlussverbindungsteil (220) und das Kathodenanschlussverbindungsteil (230) verbunden ist, und an dem abgedichteten Überschussabschnitt (130) der Batteriezelle (100) angebracht ist, und die an dem abgedichteten Überschussabschnitt (130) angebrachte Platine (200) in dem PCM-Gehäuse (300) angeordnet ist,
**dadurch gekennzeichnet, dass**
das PCM-Gehäuse (300) mit der Platine (200) von oben her verbunden ist, so dass die Platine (200) in dem PCM-Gehäuse (300) in einem Zustand aufgenommen ist, in dem die Platine (200) senkrecht zu dem abgedichteten Überschussabschnitt (130) angebracht ist,
wobei die Platine (200) ferner einen externen Eingangs- und Ausgangsanschluss aufweist, und der externe Eingangs- und Ausgangsanschluss (210) an der Platine (200) ausgebildet ist, an der das Anodenanschlussverbindungsteil (220) und das Kathodenanschlussverbindungsteil (230) über ein Verbindungsteil (211) ausgebildet sind, und
wobei das PCM-Gehäuse (300) ferner eine schlitzartige Öffnung (310) aufweist, die an einer seiner offenen Seite benachbarten Seite ausgebildet ist, und das Verbindungteil (211) sich durch die schlitzartige Öffnung (310) hindurch erstreckt.

2. Das Sekundärbatteriepack (600) nach Anspruch 1, wobei die Batteriezelle (100) eine plattenförmige Batteriezelle ist, und der Anodenanschluss (120) und der Kathodenanschluss (110) plattenförmige Leiterelemente sind.

3. Das Sekundärbatteriepack (600) nach Anspruch 1, wobei der externe Eingangs- und Ausgangsanschluss (210) auf der Platine (200) ausgebildet ist, an der das Anodenanschlussverbindungsteil (220) und das Kathodenanschlussverbindungsteil (230) ausgebildet sind.

4. Das Sekundärbatteriepack (600) nach Anspruch 1, wobei der externe Eingangs- und Ausgangsanschluss (210) an der anderen Seite der Platine (200) ausgebildet ist, an der das Anodenanschlussverbindungsteil (220) und das Kathodenanschlussverbindungsteil (230) ausgebildet sind.

5. Das Sekundärbatteriepack (600) nach Anspruch 1, das ferner ein Isolierband aufweist, das zusätzlich an einem freiliegenden Elektrodenanschlussbereich des abgedichteten Überschussabschnitts (130) angebracht ist.

6. Das Sekundärbatteriepack (600) nach Anspruch 5, wobei das Isolierband ein doppelseitiges Band ist.

7. Das Sekundärbatteriepack (600) nach Anspruch 1, das ferner ein Isolierband aufweist, das zusätzlich an zumindest einer der Außenseiten des PCM-Gehäuses (300) angebracht ist.

8. Das Sekundärbatteriepack (600) nach Anspruch 1, wobei die Batteriezelle (100) mit einer Struktur konfiguriert ist, in der eine Elektrodenanordnung, die Kathoden, Anoden und jeweils zwischen den Kathoden und Anoden angeordnete Separatoren aufweist, in einem Batteriegehäuse angeordnet ist, das aus einem Schichtlaminat hergestellt ist, das eine Metallschicht und eine Kunststoffschicht in einem abgedichteten Zustand aufweist.

9. Das Sekundärbatteriepack (600) nach Anspruch 1, wobei die Platine (200), die in dem am abgedichteten Überschussabschnitt (130) angebrachten PCM-Gehäuse (300) angeordnet ist, an dem abgedichteten Überschussabschnitt (130) in einem Zustand angebracht ist, in dem die Platine (200) in dem PCM-Gehäuse (300) angeordnet ist, so dass die Seite der Platine (200), an der das Anodenanschlussverbindungsteil (220) und das Kathodenanschlussverbindungsteil (230) ausgebildet sind, der Seite der Batteriezelle (100), an der der abgedichtete Überschussabschnitt (130) ausgebildet ist, gegenüberliegt.

10. Das Sekundärbatteriepack (600) nach Anspruch 1, wobei das Anodenanschlussverbindungsteil (220) des PCM (400) mit dem Anodenanschluss der Batteriezelle über ein zweites Sicherheitselement verbunden ist.

11. Das Sekundärbatteriepack (600) nach Anspruch 1, das ferner eine Nickelplatte (140) aufweist, die zusätzlich an einer Seite des Kathodenanschlusses (110), mit der das Kathodenanschlussverbindungsteil (230) der Platine (200) verbunden ist, durch Ultraschallschweißung angebracht ist.

12. Das Sekundärbatteriepack (600) nach Anspruch 1, das ferner ein Etikett (500) aufweist, um die Batteriezelle (100) abzudecken.

13. Das Sekundärbatteriepack (600) nach Anspruch 12, wobei das Etikett (500) mit einer Struktur konfiguriert ist, um abgedichtete Außenumfänge der Batteriezelle (100) zu bedecken.

14. Verfahren zur Herstellung des Sekundärbatteriepacks (600) nach Anspruch 1, welches aufweist:
einen Schritt zum Bilden einer Batteriezelle (100), die mit einer Struktur konfiguriert ist, in der eine Elektrodenanordnung, die Anoden, Kathoden und jeweils zwischen den Kathoden und Anoden angeordnete Separatoren aufweist, in einem Batteriegehäuse in einem abgedichteten Zustand angeordnet wird, wobei einer der abgedichteten Außenumfänge der Batteriezelle (100) einen Überschussabschnitt aufweist;
einen Schritt zum Freilegen eines Anodenanschlusses (120) und eines Kathodenanschlusses (110) an dem abgedichteten Überschussabschnitt (130) der Batteriezelle (100), und Anbringen einer Schutzschaltungsplatine (200), die ein Anodenanschlussverbindungsteil (220) und ein Kathodenanschlussverbindungsteil (230) aufweist, die jeweils mit dem Anodenanschluss (120) und dem Kathodenanschluss (110) verbunden sind, an dem abgedichteten Überschussabschnitt (130); und
einen Schritt zum Anbringen eines PCM-Gehäuses (300), das an seiner einen Seite offen ist, an den abgedichteten Überschussabschnitt (130), so dass die Schutzschaltungsplatine (200), die an dem abgedichteten Überschussabschnitt (130) angebracht ist, in dem PCM-Gehäuse (300) aufgenommen wird.

## Revendications

1. Bloc-batterie secondaire (600) comprenant :
un élément de batterie (100) ayant une borne d'anode (120) et une borne de cathode (110) formées au niveau d'une face ayant une portion excédentaire scellée (130) ; et un module de circuit de protection (PCM, 400) connecté électriquement à l'élément de batterie (100) par le biais de la borne d'anode (120) et de la borne de cathode (110), dans lequel
le PCM (400) comprend :
une carte (200) ayant un circuit de protection formé dessus, la carte (200) étant munie d'une partie de connexion de borne d'anode (220) et d'une partie de connexion de borne de cathode (230) connectées respectivement à la borne d'anode (120) et la borne de cathode (110) ; et
un boîtier de PCM (300) configuré pour recevoir la carte (200) à travers une face ouverte de celui-ci de manière que le boîtier de PCM (300) entoure la carte (200), et la carte (200) est couplée à la borne d'anode (120) et la borne de cathode (110) de l'élément de batterie (100) par le biais de la partie de connexion de borne d'anode (220) et de la partie de connexion de borne de cathode (230) et est montée sur la portion excédentaire scellée (130) de l'élément de batterie (100), et la carte (200) montée sur la portion excédentaire scellée (130) est disposée dans le boîtier de PCM (300),
**caractérisé en ce que**
le boîtier de PCM (300) est couplé à la carte (200) par au-dessus de manière que la carte (200) soit reçue dans le boîtier de PCM (300) dans un état dans lequel la carte (200) est montée perpendiculairement à la portion excédentaire scellée (130),
dans lequel la carte (200) comprend en outre une borne d'entrée et de sortie externe, et la borne d'entrée et de sortie externe (210) est formée au niveau de la carte (200) au niveau de laquelle la partie de connexion de borne d'anode (220) et la partie de connexion de borne de cathode (230) sont formées par le biais d'une partie d'interconnexion (211), et
dans lequel le boîtier de PCM (300) comprend en outre une ouverture de type fente (310) formée au niveau d'une face adjacente à sa face ouverte et la partie d'interconnexion (211) s'étend à travers l'ouverture de type fente (310).

2. Bloc-batterie secondaire (600) selon la revendication 1, dans lequel l'élément de batterie (100) est un élément de batterie en forme de plaque, et la borne d'anode (120) et la borne de cathode (110) sont des éléments conducteurs en forme de plaque.

3. Bloc-batterie secondaire (600) selon la revendication 1, dans lequel la borne d'entrée et de sortie externe (210) est formée sur la carte (200) au niveau de laquelle la partie de connexion de borne d'anode (220) et la partie de connexion de borne de cathode (230) sont formées.

4. Bloc-batterie secondaire (600) selon la revendication 1, dans lequel la borne d'entrée et de sortie externe (210) est formée au niveau de l'autre face de la carte (200) au niveau de laquelle la partie de connexion de borne d'anode (220) et la partie de connexion de borne de cathode (230) sont formées.

5. Bloc-batterie secondaire (600) selon la revendication 1, comprenant en outre un ruban isolant fixé en plus à une région d'exposition de borne d'électrode de la portion excédentaire scellée (130).

6. Bloc-batterie secondaire (600) selon la revendication 5, dans lequel le ruban isolant est un ruban double face.

7. Bloc-batterie secondaire (600) selon la revendication 1, comprenant en outre un ruban isolant fixé en plus à au moins une des faces extérieures du boîtier de PCM (300).

8. Bloc-batterie secondaire (600) selon la revendication 1, dans lequel l'élément de batterie (100) est configuré pour avoir une structure dans laquelle un ensemble d'électrodes, comprenant des cathodes, des anodes et des séparateurs disposés respectivement entre les cathodes et les anodes, est disposé dans un boîtier de batterie constitué d'une feuille laminée comprenant une couche métallique et une couche de résine dans un état scellé.

9. Bloc-batterie secondaire (600) selon la revendication 1, dans lequel la carte (200), disposée dans le boîtier de PCM (300) monté sur la portion excédentaire scellée (130), est montée sur la portion excédentaire scellée (130) dans un état dans lequel la carte (200) est disposée dans le boîtier de PCM (300) de manière que la face de la carte (200) au niveau de laquelle la partie de connexion de borne d'anode (220) et la partie de connexion de borne de cathode (230) sont formées soit opposée à la face de l'élément de batterie (100) au niveau de laquelle la portion excédentaire scellée (130) est formée.

10. Bloc-batterie secondaire (600) selon la revendication 1, dans lequel la partie de connexion de borne d'anode (220) du PCM (400) est connectée à la borne d'anode de l'élément de batterie par le biais d'un deuxième élément de sécurité.

11. Bloc-batterie secondaire (600) selon la revendication 1, comprenant en outre une plaque de nickel (140) montée en plus sur une face de la borne de cathode (110), à laquelle la partie de connexion de borne de cathode (230) de la carte (200) est couplée, par soudage par ultrasons.

12. Bloc-batterie secondaire (600) selon la revendication 1, comprenant en outre une étiquette (500) pour couvrir l'élément de batterie (100).

13. Bloc-batterie secondaire (600) selon la revendication 12, dans lequel l'étiquette (500) est configurée pour avoir une structure pour couvrir des circonférences extérieures scellées de l'élément de batterie (100).

14. Procédé de fabrication du bloc-batterie secondaire (600) selon la revendication 1, comprenant :
une étape de formation d'un élément de batterie (100) configuré pour avoir une structure dans laquelle un ensemble d'électrodes, comprenant des cathodes, des anodes et des séparateurs disposés respectivement entre les cathodes et les anodes, est disposé dans un boîtier de batterie dans un état scellé, une des circonférences extérieures scellées de l'élément de batterie (100) ayant une portion excédentaire ;
une étape d'exposition d'une borne d'anode (120) et d'une borne de cathode (110) sur la portion excédentaire scellée (130) de l'élément de batterie (100) et de montage d'une carte de circuit de protection (200), ayant une partie de connexion de borne d'anode (220) et une partie de connexion de borne de cathode (230) connectées respectivement à la borne d'anode (120) et la borne de cathode (110), sur la portion excédentaire scellée (130) ; et
une étape de montage d'un boîtier de PCM (300) ouvert au niveau d'une face de celui-ci vers la portion excédentaire scellée (130) de manière que la carte de circuit de protection (200) montée sur la portion excédentaire scellée (130) soit reçue dans le boîtier de PCM (300).
